# EUROPÄISCHE PATENTSCHRIFT

(11) **EP 0 294 850 B1**
(45) Veröffentlichungstag und Bekanntmachung des Hinweises auf die Patenterteilung: **12.05.1993**
(21) Anmeldenummer: 88109348.8
(22) Anmeldetag: 11.06.1988
(51) Int. Cl.: C04B 35/56, C04B 33/28, C04B 35/64, C04B 41/85, F28F 21/04

(54) **Verfahren zur Silicierung von porösen Formkörpern aus Siliciumcarbid/Kohlenstoff**
Process for siliconising porous shaped bodies of silicon carbide/carbon
Procédé de silicisation des corps moulés de carbure de silicium/carbone

(30) Priorität: 12.06.1987 DE 3719606
(43) Veröffentlichungstag der Anmeldung: 14.12.1988
(73) Patentinhaber: Hoechst CeramTec Aktiengesellschaft, 95100 Selb (DE)
(72) Erfinder: Pollak, Wolfgang, D-8672 Selb (DE); Schelter, Heinrich, D-8672 Selb (DE)
(74) Vertreter: Spiess, Bernhard

(56) Entgegenhaltungen:
- EP-A- 0 064 606
- EP-A- 0 134 254
- EP-A- 0 147 478
- DE-A- 3 136 253

## Beschreibung

Die vorliegende Erfindung betrifft ein Verfahren zur Silicierung von porösen Formkörpern aus Siliciumcarbid/Kohlenstoff mit parallelen Außenwänden, wobei die Formkörper in Gegenwart von Silicium über die Schmelztemperatur von elementarem Silicium erhitzt werden und anschließend unter Vakuum abkühlen. Silizierte Formkörper in Quaderform werden insbesondere im Apparatebau als Wärmetauscher verwendet.

In der DE-OS 29 10 628 wird die Infiltration von porösen Formkörpern aus einem Siliciumcarbid- Kohlenstoff-Gemisch unter Verwendung von siliciumhaltigen Speisern beschrieben. Diese Speiser werden aus einem Gemisch von Kohlenstoff und Silicium hergestellt, wobei während des Silizierens ein Teil des Siliciums und der Kohlenstoff miteinander reagieren und ein Gerüst aus Siliciumcarbid bilden und das überschüßig gespeicherte und geschmolzene Silicium in den zu infiltrierenden Formkörper geleitet wird. Die danach poröse SiC-Matrix der Speiser läßt sich nach dem Brand leicht ablösen. Dabei ist es wünschenswert, daß bei der Silizierung der zu silizierende Preßling unten und der Silicium-Kohle-Preßling als Speiser oben liegt, weil diese Art der Anordnung ein Einfließen von geschmolzenem Silicium in den Siliciumcarbid-Kohle-Preßling und sein Durchdringen sowohl aufgrund der Kapillarwirkung als auch aufgrund der Schwerkraft begünstigt. Der Nachteil dieser Methode ist, daß extra eine Masse aus Silicium und Kohle hergestellt und zu einem Speiser verpreßt werden muß, der nach Gebrauch nicht wieder benutzt werden kann. Eine Variation der Speiserherstellung besteht darin, daß das Silicium-Kohle-Gemisch für die Durchführung des Silizierungsverfahrens in loser Pulverform eingesetzt wird. Man schüttet dann die gewünschte Menge in und um den Siliciumcarbid-Kohle-Preßling. Für die Durchführung dieser beiden Methoden wird feinkörniges Silicium und Kohle gemischt. Als nachteilig hat sich erwiesen, daß durch das sehr feine Silicium mit einer durchschnittlichen Korngröße von 75 µm Verunreinigungen eingeschleppt werden, die dann später zu Fehlern, insbesondere zu Rissen im fertig silizierten Formkörper führen können.

Um die Schlagfestigkeit von SiSiC-Verbundstrukturen zu verbessern, stellt man gemäß DE-OS 27 07 299 zunächst einen Formkörper aus Kohlenstoffasern her, der gegebenenfalls noch SiC und als Entformungsmittel noch 10 bis 55 % Bornitrid enthält, das mit geschmolzenem Silicium im wesentlichen nicht reagiert. Die Silizierung erfolgt in einer Graphitform mit geschmolzenem Silicium. Die Infiltration mit diesem geschmolzenem Silicium erfolgt bei Temperaturen über 1410°C über Dochte, die aus Kohlefasern bestehen. Als Nachteil dieses Verfahrens muß die sehr aufwendige Herstellung der Graphitform und des Dochtmaterials angesehen werden, die es für die Massenfertigung von Formkörpern unwirtschaftlich machen.

In der EP 01 34 254 wird als wiederverwendbare Aufnahmevorrichtung für das Silicium die folgende Anordnung vorgeschlagen:
a) eine mit Bornitrid imprägnierte Graphitplatte
b) eine zweite Platte aus Siliciumcarbid, welche zuvor mit Silicium infiltriert und anschließend mit einem Gemisch aus Bornitrid, Siliciumcarbid und Kohlenstoff beschichtet wurde.

Zwischen diese beiden Platten wird das grobstückige Speisersilicium gegeben. Auf die obere Siliciumcarbidplatte wird das zu silizierende Werkstück gelegt und siliziert. Der Formkörper wird abschließend in einer Stickstoffatmosphäre bei Drücken von 0,05 bis 1 bar abgekühlt.

Um das in handelsüblichem Siliciumcarbid als Verunreinigung vorkommende Siliciumdioxid zu entfernen, wird gemäß dem Verfahren nach DE-OS 26 44 503 der poröse Formkörper in Abwesenheit von Sauerstoff auf die Silizierungstemperatur oberhalb des Siliciumschmelzpunktes erhitzt. Danach wird der Gegenstand in einer Gasumgebung, die aus Stickstoff mit 0 bis 10 %, vorzugsweise 3 bis 7 % Wasserstoff besteht, gehalten. Bei dieser Gasbehandlung reagiert der Stickstoff und der Wasserstoff mit sämtlichen im Siliciumcarbid vorhandenen Oxiden des Siliciums und überführt diese in Siliciumnitrid. Der Stickstoff reagiert auch mit den sauberen Siliciumoberflächen unter Bildung einer Siliciumnitridhaut, welche jegliche Durchdringung des porösen Formkörpers durch Silicium behindert. Diese stickstoffhaltige Umgebung wird abgesetzt, wenn die Silizierungstemperatur erreicht ist, so daß Siliciummetall in den Formkörper über das Porengerüst fließt und rasch den verfügbaren Kohlenstoff des Gegenstandes durchdringt.

Grundsätzlich haben alle diese bekannten Verfahren zur Herstellung von infiltriertem Siliciumcarbid den Nachteil, daß beim Erstarren des Siliciums dieses aufgrund der Volumenvergrößerung aus dem Formkörper austritt und dessen Oberfläche benetzt, was entweder zu Verklebungen mit den Brennhilfsmitteln oder aber zur Bildung von Perlen auf der Oberfläche der Formkörper führt. Dies ist vor allem bei kompliziert gebauten Körpern, z.B. Wärmetauschern mit einer großen inneren Oberfläche, sehr nachteilig, da diese Perlen nachträglich nicht mehr aus den unzugänglichen Strömungskanälen entfernt werden können.

Diese Siliciumperlen treten besonders dann häufig auf, wenn der Formkörper nach dem Silizieren in einer Stickstoffatmosphäre auskühlt.

Es wurde nun ein Verfahren zum Silizieren von porösen Formkörpern aus Siliciumcarbid/Kohlenstoff, die mindestens 2 parallele Aussenwände besitzen, gefunden, bei dem man ein Gemisch aus Siliciumcarbidpulver, Kohlenstoff und organischem Bindemittel zu einem Grünkörper verformt, man das Bindemittel des Grünkörpers in einer nichtoxidierenden Atmosphäre durch Verkokung bei ca. 1000°C verkokt und man den erhaltenen Rohling durch Einwirken von elementarem Silicium bei Temperaturen von mindestens 1400°C siliziert, wobei der erhaltene Rohling während des Silizierens mit einer unteren parallelen Außenfläche auf mindestens einem SiSiC-Behälter aufliegt und auf der oberen parallelen Außenfläche mindestens ein SiSiC-Behälter angeordnet ist, die SiSiC-Behälter mit elementarem Silicium mindestens teilweise gefüllt sind und die Anordnung aus SiSiC-Behältern und erhaltenem SiSiC-Körper nach beendeter Silizierung unter Vakuum abgekühlt wird. Im beanspruchten Verfahren wird zwischen der unteren parallelen Außenfläche des Rohlings und den SiSiC-Behältern, auf denen dieser aufliegt, eine SiSiC-Platte angeordnet.

Damit soll eine homogene Verteilung des Siliciums in dem Formkörper erreicht und das Ausschwitzen von Silicium beim Abkühlen unterdrückt werden. Insbesondere sollen eventuell vorhandene enge Kanäle im Inneren des SiSiC-Körpers nicht durch Siliciumperlen verengt werden, d.h. die Strömungskanäle von Wärmetauschern nicht mehr verstopft werden. Dabei soll eine möglichst exakte Einzeldosierung mit dem Speisersilicium erreicht werden.

Die Herstellung von Wärmetauschern in Folienbauweise aus keramischem Material ist Gegenstand der DE-OS 31 36 253, auf die hier ausdrücklich Bezug genommen wird. Nach dem dort angegebenen Verfahren lassen sich auch SiSiC-Wärmetauscher herstellen. Hierzu werden SiC-Pulver, Kohlenstoff und ein Bindemittel vermischt und die Mischung zu Folien verarbeitet. In die einzelne Folienkarten werden Strömungskanäle eingestanzt oder geprägt und aus mehreren Einzelkarten der grüne Wärmetauscher aufgebaut. Es folgen Ausheizen der Bindemittel, Verkokung und Silizierung und eventuell Nachbearbeiten der Öffnungen der Strömungskanäle.

Gegenstand der Unteransprüche sind u. a. Verfahren zur Herstellung von Wärmetauschern in Folienbauweise, in denen Gemische aus Siliziumcarbid und Graphit mit besonderer Korngrößenverteilung verwendet werden und die zu besonders günstigen Ergebnissen führen.

Günstig ist es, wenn man ein Siliciumcarbid/Graphit-Gemisch bestehend aus
a) 55 - 65 Gew.-% Siliciumcarbid einer Siebfraktion von 0 - 80 µm,
b) 17 - 23 Gew.-% Siliciumcarbid einer Siebfraktion von 0 - 40 µm
c) 15 - 21 Gew.-% Siliciumcarbid einer Siebfraktion von 0 - 30 µm,
d) 1 - 5 Gew.-% Graphit einer Siebfraktion von 0 - 16 µm
mit mindestens einem organischen Lösemittel und einem organischen Bindemittel vermischt, man die entstehende Schlickergießmasse zu einer grünen Keramikfolie verarbeitet und aus dieser den Wärmetauscher herstellt.

Hinsichtlich der Siliciumcarbid-Fraktion a ist die Verwendung eines Gemisches vorteilhaft, das
10 Gew.-% einer Siebfraktion von 60 - 80 µm,
40 Gew.-% einer Siebfraktion von 40 - 60 µm,
40 Gew.-% einer Siebfraktion von 20 - 40 µm und
10 Gew.-% einer Siebfraktion von 0 - 30 µm
enthält.

Hinsichtlich der Siliciumcarbid-Fraktion b ist die Verwendung eines Gemisches vorteilhaft, daß
10 Gew.-% einer Siebfraktion von 18 - 40 µm,
40 Gew.-% einer Siebfraktion von 12 - 18 µm,
40 Gew.-% einer Seibfraktion von 8 - 12 µm,
10 Gew.-% einer Siebfraktion von 0 - 8 µm
enthält.

Hinsichtlich der Siliciumcarbid-Fraktion c ist die Verwendung eines Gemisches vorteilhaft, das
10 Gew.-% einer Siebfraktion von 0 - 30 µm,
40 Gew.-% einer Siebfraktion von 3,5 - 5 µm,
40 Gew.-% einer Siebfraktion von 2,5 - 3,5 µm,
10 Gew.-% einer Siebfraktion von 0 - 2,5 µm
enthält.

Hinsichtlich des Graphit-Pulvers ist die Verwendung eines Gemisches vorteilhaft, das
10 Gew.-% einer Siebfraktion von 7 - 16 µm,
40 Gew.-% einer Siebfraktion von 3 - 7 µm,
40 Gew.-% einer Siebfraktion von 1 - 3 µm,
10 Gew.-% einer Siebfraktion von 0 - 1 µm
enthält.

Besonders bewährt hat sich ein Siliciumcarbid/Graphit-Gemisch, das
60 Gew.-% Siliciumcarbid einer Siebfraktion von 0 - 80 µm,
20 Gew.-% Siliciumcarbid einer Siebfraktion von 0 - 40 µm,
18 Gew.-% Siliciumcarbid einer Siebfraktion von 0 - 30 µm und
2 Gew.-% Graphit der Siebfraktion von 0 - 16 µm enthält.

Es ist in einer Variante der vorliegenden Erfindung möglich, auch zwischen der oberen parallelen Außenfläche des Rohlings und den darauf angeordneten SiSiC-Behältern eine SiSiC-Platte anzuordnen. Es ist vorteilhaft, wenn auf der Oberseite des Rohlings nur ein einziger Behälter angeordnet wird, dessen Grundfläche etwa der oberen Auflagefläche des Formkörpers entspricht. In diesem Fall ist die obere Platte überflüssig.

Es ist vorteilhaft, die untere und gegebenenfalls die oben verwendete SiSiC-Platte mindestens auf einer Seite mit einem Gemisch aus Bornitrid, Siliciumcarbid und Graphit zu beschichten, um später das Zerlegen der Anordnung zu erleichtern. Insbesondere sollte die obere Seite der unteren Platte und gegebenenfalls die untere Seite der oberen Platte oder die untere Seite der oben angeordneten Behälter so beschichtet werden. Besser ist eine beidseitige Beschichtung. Die Beschichtung erfolgt durch Auftragen von oder Eintauchen in wäßrige Suspensionen der genannten Stoffe, die auch noch ein Bindemittel enthalten können. Die Beschichtung muß nichtjedesmal neu aufgebracht werden.

Es ist ferner vorteilhaft, wenn unterhalb der unteren SiSiC-Platte nur ein einziger SiSiC-Behälter angeordnet wird und dessen Abmessungen etwa der Grundfläche des Rohlings entsprechen.

Die Gesamtmenge an eingesetztem elementarem Silicium hängt etwas von Dichte und Kohlenstoffgehalt des zu silizierenden Rohlings ab. Im allgemeinen beträgt diese Menge 40 bis 80 Gew.-%, insbesondere 60 bis 75 % bezogen auf das Gewicht des verkokten Rohlings.

Zur Herstellung des zu silizierenden Formkörpers wird zunächst in bekannter Weise ein Grünkörper - der mindestens zwei parallele Außenwände besitzt - aus Siliciumcarbid, Kohlenstoff-Pulver und Bindemitteln hergestellt, der insbesondere die Form eines Wärmetauschers besitzen kann.

Der so hergestellte Grünkörper wird erhitzt, bis die flüchtigen Bestandteile des Bindemittels ausgetrieben sind. Im darauf folgenden Verkokungsbrand in einer nicht oxidierenden Atmosphäre werden alle noch verbliebenen organischen Zusätze in Kohlenstoff umgewandelt. Im Anschluß daran erfolgt die Silizierung des Rohlings. Aus der Masse des verkokten Formkörpers berechnet man die notwendige Menge an Silicium, indem man die Masse mit einem empirisch ermittelten Faktor von 0,5 bis 0,8, multipliziert. Die so bestimmte Menge an elementarem Silicium wird auf mindestens zwei SiSiC-Behälter verteilt, von denen mindestens einer unterhalb der SiSiC-Platte unterhalb des zu silizierenden Rohlings angeordnet wird, so daß die untere Begrenzungsfläche des Rohlings in Kontakt mit dieser SiSiC-Platte ist und mindestens ein weiterer SiSiC-Behälter auf die obere Begrenzungsfläche des Rohlings gestellt wird. Die Form dieser SiSiC-Behälter ist nicht kritisch. Es kann sich z.B. um zylindrische oder geeignete polyedrische Behälter handeln, bevorzugt sind jedoch Gefäße, die unten geschlossen und oben offen sind. Es können auch nahezu allseitig geschlossene Behälter verwendet werden, die nur eine kleine, z.B. seitliche Einfüllöffnung für das Silicium aufweisen. Die Auswahl dieser Gefäße hängt von der Silizierungstemperatur ab. So sind bei hohen Silizierungstemperaturen für den Einsatz unter der unteren SiSiC-Platte einseitig offene Behälter, d.h. Gefäße, die unten geschlossen und oben offen sind, bevorzugt, da dann der Siliciumtransport hauptsächlich über die Dampfphase erfolgt. Bei niedrigeren Temperaturen ist hierfür auch der Einsatz von nahezu allseitig geschlossenen Behältern möglich, da die Auflagefläche zwischen Behälter und Rohling größer ist. Diese größere Kontaktfläche ist in diesem Falle günstiger, weil der größere Teil des Siliciums in flüssiger Form durch im Behälter und im Formkörper befindliche Poren, die als Kapillaren wirken, transportiert wird. Aus diesem Grund sind auch mehrere kleine (oben offene) Behälter besser als ein großer (oben offener) Behälter gleicher Wanddicke. Falls es sich bei dem zu silizierenden Formkörper um quaderförmige Wärmetauscher mit Grundflächen von 3-6 dm² handelt, werden unter einem Wärmetauscher mit zwischengeschalteter SiSiC-Platte vorzugsweise 4-15, insbesondere 8-12 offene Behälter angeordnet. Die lichte Höhe der unter der Platte angeordneten SiSiC-Gefäße - d.h. der Abstand zwischen Platte und Oberkante des eingefüllten Siliciums - sollte 30 cm nicht übersteigen. Günstiger sind lichte Höhen von 1 bis 25 cm, bevorzugt solche von 5 bis 15 cm. Dagegen ist die Wandstärke aller Gefäße und die lichte Höhe der auf der oberen Begrenzungsfläche des Rohlings angeordneten Behälter nicht kritisch. Bevorzugte Ausgestaltungen der Erfindung bestehen darin, mindestens 40 % der oberen parallelen Außenfläche des Rohlings mit den Kontaktflächen der SiSiC-Behälter abzudecken bzw. Zahl und Größe der unten angeordneten SiSiC-Behälter so zu wählen, daß deren Projektionsfläche mindestens 15 %, vorzugsweise mindestens 25 %, insbesondere mindestens 40 % der unteren parallelen Außenfläche des Rohlings entspricht. Dies kann entweder geschehen, indem man möglichst viele kleinere Behälter verwendet oder am besten für die obere Begrenzungsfläche einen einzigen Behälter verwendet, der mit seiner Bodenfläche mindestens 40 % der oberen Auflagefläche des Rohlings abdeckt, insbesondere ihr etwa entspricht.

Gemäß einer weiteren bevorzugten Ausgestaltung der Erfindung wird das Silicium auf die über und unter dem zu silizierenden Rohkörper angeordneten Behälter so verteilt, daß in die oberen Behälter 50 bis 80 %, insbesondere 60 bis 75 % der ingesamt eingesetzten Menge an elementarem Silicium gegeben wird. Um das Einschleppen von Verunreinigungen, insbesondere SiO₂, zu vermeiden, ist es vorteilhaft, Silicium in einer großen Körnung einzusetzen. Bevorzugt sind Korngrößen von 3 bis 10 mm.

In der Praxis stellt man auf eine Grundplatte, hergestellt aus handelsüblichem feinkörnigem Graphit die zwecks Imprägnierung mit einer wäßrigen Bornitrid-Suspension bestrichen und anschließend getrocknet wurde, zunächst den oder die für unten vorgesehenen mit Silicium gefüllten SiSiC-Behälter. Auf diese oder diesen Behälter legt man die SiSiC-Platte und darauf den zu silizierenden Formkörper und auf diesen die oder den für oben vorgesehenen mit Speisersilicium gefüllten SiSiC-Behälter. Diese Anordnung wird in einem Ofen mindestens auf die Schmelztemperatur des Siliciums erhitzt. Bevorzugt ist jedoch eine Mindesttemperatur von 1450°C, insbesondere 1500°C. Die Obergrenze von 1800°C sollte nicht überschritten werden, bevorzugt ist eine Höchsttemperatur von 1700°C. Die Temperatur wird über einen Zeitraum von mindestens einer Stunde gehalten, jedoch vorzugsweise nicht länger als fünf Stunden. Das Silizieren erfolgt unter Edelgasatmosphäre (z.B. Argon) oder unter Vakuum bei reinem Druck von maximal 2 mbar. Möglich ist aber auch das Silizieren unter reduktiven Bedingungen (z.B. wasserstoffhaltige Atmosphäre). Um das perlenförmige Ausschwitzen von Silicium beim Abkühlen zu vermeiden, läßt man den silizierten Formkörper im Vakuum bis zur Öffnungstemperatur des Ofens (ca. 150°C) abkühlen. Der Druck beträgt hierbei vorzugsweise maximal 5 mbar und insbesondere 1-2 mbar. Aufgrund des sehr großen Benetzungswinkels von reinem Silicium gegenüber Siliciumcarbid wird erreicht, daß eventuell austretendes Silicium sich großflächig über die Oberfläche des Formkörpers verteilt. Auf diese Weise ist es möglich, funktionsfähige SiSiC-Wärmetauscher ohne hemmende Siliciumverschlüsse in den Strömungskanälen herzustellen.

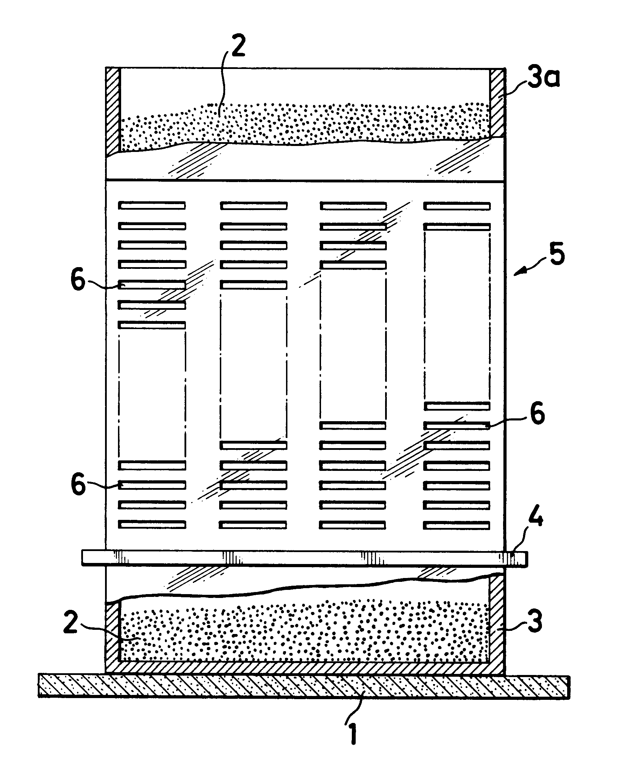

Eine bevorzugte Ausgestaltung des erfindungsgemäßen Verfahrens wird anhand der Figur näher beschrieben. Auf einer mit Bornitrid beschichteten Graphit-platte 1 steht ein einziger SiSiC-Behälter 3, der mit Speiser-Silicium 2 etwa zur Hälfte gefüllt ist. Der Behälter 3 wird durch eine SiSiC-Platte 4 abgedeckt. Sie ist zumindest auf ihrer Oberseite mit einem Gemisch aus Bornitrid und Graphit beschichtet (nicht gezeichnet). Auf ihr wird der zu silizierende Rohling 5, der im vorliegenden Fall zu einem Wärmetauscher führen soll, angeordnet. Auf 5 wird ein weiterer SiSiC-Behälter 3a angeordnet, der ebenfalls mit Silicium 2 gefüllt ist. Die Unterseite von 3a ist mit einer Mischung aus Bornitrid, Silicumcarbid und Graphit beschichtet (nicht gezeichnet), um nach dem Silizieren die Anordnung besser zerlegen zu können. Rohling 5 weist Öffnungen 6 auf (später Eintrittsöffnungen für das zu kühlende Medium).

Der beschriebene Aufbau wird im Ofen (nicht gezeichnet) aufgestellt und wie beschrieben siliziert.

Das folgende Ausführungsbeispiel erläutert das erfindungsgemäße Verfahren

### Beispiel

Ein nach dem Verfahren der DE-OS 31 36 253 hergestellter, quaderförmiger verkokter Wärmetauscher aus SiC/C hat die Abmessungen 300 x 300 x 150 mm, ein Gewicht von 12,535 kg und eine Dichte von 1,75 g/cm³.

Zwei wannenförmige Behälter aus mit Silicium infiltriertem SiC-Schlickerguß mit den Abmessungen 300 x 150 x150 mm werden mit jeweils 3,259 kg Speiser-Silicium gefüllt.

Der erste Behälter wird auf einer mit Bornitrid beschichteten Graphitplatte abgestellt. Diesen Behälter deckt eine Si-infiltrierte mit Graphit, Bornitrid und SiC beschichtete poröse SiC-Platte ab, die die Abmessungen 310 x 160 mm aufweist. Die Dicke der Platte beträgt 20 mm. Auf dieser Platte wird der verkokte Wärmetauscher abgestellt, so daß seine Auflagefläche von der SiC-Platte gänzlich abgedeckt ist. Die Unterseite des 2. Behälters aus SiC-Schlickerguß wird ebenfalls mit Bornitrid, Graphit und SiC beschichtet. Mit diesem Behälter wird die obere Auflagefläche des Wärmetauschers abgedeckt.

Dieser Brandaufbau wird in den Ofen eingestellt. Im Vakuum (maximal 1,5 mbar) wird mit einer Geschwindigkeit von 150°C/h auf 1650°C aufgeheizt. Diese Temperatur wird 3 Stunden gehalten. Dann wird im Vakuum bis ca. 1100°C abgekühlt und anschließend wird unter Heliumatmosphäre (ca. 800 mbar) die Abkühlgeschwindigkeit gesteigert.

Nach der Entnahme aus dem Ofen ist sämtlicher im Bauteil enthaltener Kohlenstoff in Sekundär-SiC umgewandelt und alle Porenräume sind mit Si gefüllt. Das sich bei der Erstarrung ausdehnende Si hat die Wärmetauscheroberfläche gleichmäßig mit einem Si-Film überzogen, das dem Bauteil seinen metallischen Glanz gibt. Alle Strömungskanäle sind frei.
Das Gewicht des infiltrierten Wärmetauschers beträgt nun 18,11 kg bei einer Dichte von 2,85 g/cm³. Die Abmessungen sind gleich geblieben.

## Patentansprüche

1. Verfahren zum Silizieren von porösen Formkörpern aus Siliciumcarbid/Kohlenstoff, die mindestens zwei parallele Außenwände besitzen, bei dem man ein Gemisch aus Siliciumcarbidpulver, Kohlenstoff und organischem Bindemittel zu einem Grünkörper verformt, man das Bindemittel des Grünkörpers in einer nichtoxidierenden Atmosphäre bei ca. 1000°C verkokt und man den erhaltenen Rohling durch Einwirken von elementarem Silicium bei Temperaturen von mindestens 1400°C siliziert, wobei der erhaltene Rohling während des Silizierens mit einer unteren parallelen Außenfläche auf mindestens einem SiSiC-Behälter aufliegt und auf der oberen parallelen Außenfläche mindestens ein SiSiC-Behälter angeordnet ist, die SiSiC-Behälter mit elementarem Silicium mindestens teilweise gefüllt sind und die Anordnung aus SiSiC-Behältern und erhaltenem SiSiC-Körper nach beendeter Silizierung unter Vakuum abgekühlt wird, wobei zusätzlich zwischen der unteren parallelen Außenfläche des Rohlings und den SiSiC-Behältern, auf denen dieser aufliegt, eine SiSiC-Platte angeordnet wird.

2. Verfahren nach Anspruch 1, dadurch gekennzeichnet, daß man oberhalb des Rohlings SiSiC-Behälter anordnet, die eine Fläche bedecken, die mindestens 40 % der oberen parallelen Außenfläche des Rohlings ausmacht.

3. Verfahren nach Anspruch 2, dadurch gekennzeichnet, daß über dem Rohling nur ein einziger Behälter angeordnet wird, dessen Grundfläche etwa der oberen Auflagefläche des Rohlings entspricht.

4. Verfahren nach Anspruch 1, dadurch gekennzeichnet, daß eine SiSiC-Platte verwendet wird, die mindestens auf einer Seite mit einem Gemisch aus Bornitrid, Siliciumcarbid und Graphit beschichtet ist.

5. Verfahren nach Anspruch 1, dadurch gekennzeichnet, daß man nach beendeter Silizierung unter einem Druck abkühlt, der maximal 5 mbar beträgt.

6. Verfahren nach Anspruch 5, dadurch gekennzeichnet, daß man nach beendeter Silizierung unter einem Druck abkühlt, der 1 bis 2 mbar beträgt.

7. Verfahren nach Anspruch 1, dadurch gekennzeichnet, daß nur ein einziger SiSiC-Behälter unterhalb der unteren SiSiC-Platte angeordnet wird und seine Abmessungen etwa der Grundfläche des Rohlings entsprechen.

8. Verfahren nach Anspruch 1, dadurch gekennzeichnet, daß als Rohling ein Körper eingesetzt wird, der enge Kanäle im Inneren aufweist.

9. Verfahren nach Anspruch 8, dadurch gekennzeichnet, daß als Rohling ein Wärmetauscher in Folienbauweise eingesetzt wird.

10. Verfahren nach Anspruch 9, dadurch gekennzeichnet, daß als Rohling ein quaderförmiger Wärmetauscher eingesetzt wird.

11. Verfahren nach Anspruch 1, dadurch gekennzeichnet, daß man die SiSiC-Platte auf SiSiC-Behälter legt, der/die oben offen ist/sind.

12. Verfahren nach Anspruch 1, dadurch gekennzeichnet, daß man die SiSiC-Platte auf SiSiC-Behälter legt, die mindestens 15 %, insbesondere mindestens 40 % der unteren parallelen Außenfläche des Rohlings bedecken.

13. Verfahren nach Anspruch 1, dadurch gekennzeichnet, daß man die Gesamtmenge des eingesetzten elementaren Siliciums so bemißt, daß sie 40 bis 80 Gew.-%, insbesondere 60 bis 75 %, bezogen auf das Gewicht des verkokten Rohlings, ausmacht.

14. Verfahren nach Anspruch 1, dadurch gekennzeichnet, daß man die Siliciumfüllung in den oberhalb des Rohlings angeordneten Behältern so bemißt, daß sie 50 bis 80 %, insbesondere 60 bis 75 % der insgesamt eingesetzten Menge an elementarem Silicium ausmacht.

15. Verfahren nach Anspruch 1, dadurch gekennzeichnet, daß die Silizierung im Vakuum durchgeführt wird.

16. Verfahren nach Anspruch 9, dadurch gekennzeichnet, daß man ein Siliciumcarbid/Graphit-Gemisch bestehend aus
a) 55 - 65 Gew.-% Siliciumcarbid einer Siebfraktion von 0 - 80 µm
b) 17 - 23 Gew.-% Siliciumcarbid einer Siebfraktion von 0 - 40 µm
c) 15 - 21 Gew.-% Siliciumcarbid einer Siebfraktion von 0 - 30 µm
d) 1 - 5 Gew.-% Graphit einer Siebfraktion von 0 - 16 µm
mit mindestens einem organischen Lösemittel und einem organischen Bindemittel vermischt, man die entstehende Schlickergießmasse zu einer grünen Keramikfolie verarbeitet und aus dieser den Wärmetauscher herstellt.

17. Verfahren nach Anspruch 16, dadurch gekennzeichnet, daß man eine Siliciumcarbid-Fraktion a einsetzt, die
10 Gew.-% einer Siebfraktion von 60 - 80 µm
40 Gew.-% einer Siebfraktion von 40 - 60 µm
40 Gew.-% einer Siebfraktion von 20 - 40 µm und
10 Gew.-% einer Siebfraktion von 0 - 30 µm
enthält.

18. Verfahren nach Anspruch 16, dadurch gekennzeichnet, daß man eine Siliciumcarbid-Fraktion b einsetzt, die
10 Gew.-% einer Siebfraktion von 18 - 40 µm
40 Gew.-% einer Siebfraktion von 12 - 18 µm
40 Gew.-% einer Siebfraktion von 8 - 12 µm
10 Gew.-% einer Siebfraktion von 0 - 8 µm
enthält.

19. Verfahren nach Anspruch 16, dadurch gekennzeichnet, daß man eine Siliciumcarbid-Fraktion c einsetzt, die
10 Gew.-% einer Siebfraktion von 0 - 30 µm
40 Gew.-% einer Siebfraktion von 3,5 - 5 µm
40 Gew.-% einer Siebfraktion von 2,5 - 3,5 µm
10 Gew.-% einer Siebfraktion von 0 - 2,5 µm
enthält.

20. Verfahren nach Anspruch 16, dadurch gekennzeichnet, daß man ein Graphit-Pulver einsetzt, das
10 Gew.-% einer Siebfraktion von 7 - 16 µm
40 Gew.-% einer Siebfraktion von 3 - 7 µm
40 Gew.-% einer Siebfraktion von 1 - 3 µm
10 Gew.-% einer Siebfraktion von 0 - 1 µm
enthält.

21. Verfahren nach Anspruch 16, dadurch gekennzeichnet, daß man ein Siliciumcarbid/Graphit-Gemisch einsetzt, das
60 Gew.-% Siliciumcarbid einer Siebfraktion von 0 - 80 µm
20 Gew.-% Siliciumcarbid einer Siebfraktion von 0 - 40 µm
18 Gew.-% Siliciumcarbid einer Siebfraktion von 0 - 30 µm und
2 Gew.-% Graphit der Siebfraktion von 0 - 16 µm
enthält.

## Claims

1. A process for silicizing porous shaped bodies of silicon carbide/carbon, which have at least two parallel outer walls, in which a mixture of silicon carbide powder, carbon and organic binder is shaped to give a green compact, the binder of the green compact is carbonized at about 1000°C in a non-oxidizing atmosphere and the resulting blank is silicized by the action of elemental silicon at temperatures of at least 1400°C, the resulting blank resting during the silicizing with a lower parallel outer surface on at least one SiSiC container and at least one SiSiC container being arranged on the upper parallel outer surface, the SiSiC containers being at least partially filled with elemental silicon and the array of SiSiC containers and resulting SiSiC body being cooled in vacuo after the silicizing has been completed, wherein an SiSiC plate is additionally arranged between the lower parallel outer surface of the blank and the SiSiC containers, on which the blank rests.

2. The process as claimed in claim 1, wherein SiSiC containers, which cover an area amounting to at least 40% of the upper parallel outer surface area of the blank, are arranged above the blank.

3. The process as claimed in claim 2, wherein only a single container, whose base area approximately corresponds to the upper support surface area of the blank, is arranged above the blank.

4. The process as claimed in claim 1, wherein an SiSiC plate is used which is coated on at least one side with a mixture of boron nitride, silicon carbide and graphite.

5. The process as claimed in claim 1, wherein, after the silicizing has been completed, the cooling is carried out under a pressure of at most 5 mbar.

6. The process as claimed in claim 5, wherein, after the silicizing has been completed, the cooling is carried out under a pressure of 1 to 2 mbar.

7. The process as claimed in claim 1, wherein only a single SiSiC container is arranged below the lower SiSiC plate and its dimensions approximately correspond to the base area of the blank.

8. The process as claimed in claim 1, wherein the blank used is a body which has narrow channels in its interior.

9. The process as claimed in claim 8, wherein the blank used is a heat exchanger in foil construction.

10. The process as claimed in claim 9, wherein the blank used is a cuboid heat exchanger.

11. The process as claimed in claim 1, wherein the SiSiC plate is placed onto an SiSiC container or containers, which is or are open at the top.

12. The process as claimed in claim 1, wherein the SiSiC plate is placed onto SiSiC containers which cover at least 15%, in particular at least 40%, of the lower parallel outer surface area of the blank.

13. The process as claimed in claim 1, wherein the total quantity of the elemental silicon used is such that it amounts to 40 to 80% by weight, in particular 60 to 75%, relative to the weight of the carbonized blank.

14. The process as claimed in claim 1, wherein the silicon filling in the containers arranged above the blank is such that it amounts to 50 to 80%, in particular 60 to 75%, of the total quantity of elemental silicon used.

15. The process as claimed in claim 1, wherein the silicizing is carried out in vacuo.

16. The process as claimed in claim 9, wherein a silicon carbide/graphite mixture composed of
a) 55-65% by weight of silicon carbide of a screen fraction of 0-80 µm,
b) 17-23% by weight of silicon carbide of a screen fraction of 0-40 µm,
c) 15-21% by weight of silicon carbide of a screen fraction of 0-30 µm and
d) 1-5% by weight of graphite of a screen fraction of 0-16 µm
is mixed with at least one organic solvent and an organic binder, the resulting slip-casting composition is processed to give a green ceramic foil, and the heat exchanger is produced from the latter.

17. The process as claimed in claim 16, wherein a silicon carbide fraction a is used which contains
10% by weight of a screen fraction of 60-80 µm,
40% by weight of a screen fraction of 40-60 µm,
40% by weight of a screen fraction of 20-40 µm and
10% by weight of a screen fraction of 0-30 µm.

18. The process as claimed in claim 16, wherein a silicon carbide fraction b is used which contains
10% by weight of a screen fraction of 18-40 µm,
40% by weight of a screen fraction of 12-18 µm,
40% by weight of a screen fraction of 8-12 µm and
10% by weight of a screen fraction of 0-8 µm.

19. The process as claimed in claim 16, wherein a silicon carbide fraction c is used which contains
10% by weight of a screen fraction of 0-30 µm,
40% by weight of a screen fraction of 3.5-5 µm,
40% by weight of a screen fraction of 2.5-3.5 µm and
10% by weight of a screen fraction of 0-2.5 µm.

20. The process as claimed in claim 16, wherein a graphite powder is used which contains
10% by weight of a screen fraction of 7-16 µm,
40% by weight of a screen fraction of 3-7 µm,
40% by weight of a screen fraction of 1-3 µm and
10% by weight of a screen fraction of 0-1 µm.

21. The process as claimed in claim 16, wherein a silicon carbide/graphite mixture is used which contains
60% by weight of silicon carbide of a screen fraction of 0-80 µm,
20% by weight of silicon carbide of a screen fraction of 0-40 µm,
18% by weight of silicon carbide of a screen fraction of 0-30 µm and
2% by weight of graphite of the screen fraction of 0-16 µm.

## Revendications

1. Procédé pour silicier des objets moulés poreux en carbure de silicium et carbone ayant au moins deux parois extérieures parallèles, procédé suivant lequel on forme une pièce brute avec un mélange d'une poudre de carbure de silicium, de carbone et d'un liant organique, pièce dont on cokéfie le liant aux environs de 1000°C dans une atmosphère non oxydante, puis on silicie l'ébauche ainsi obtenue avec du silicium élémentaire à des températures d'au moins 1400°C en la plaçant pour cette opération avec une surface externe inférieure parallèle sur un ou plusieurs réservoirs de Si-SiC et en disposant sur la surface externe supérieure parallèle également un ou plusieurs réservoirs de Si-SiC, réservoirs dont est garnie au moins une partie de silicium élémentaire, et quand l'opération de silicisation est terminée on refroidit sous vide les réservoirs et les pièces de Si-SiC obtenues, une plaque de Si-SiC étant en outre disposée entre la surface externe parallèle inférieure de l'ébauche et les réservoirs sur lesquels celle-ci repose.

2. Procédé selon la revendication 1, caractérisé en ce que l'on place au-dessus de l'ébauche des réservoirs de SiSiC recouvrant une surface qui représente au moins 40% de la surface externe parallèle supérieure de l'ébauche.

3. Procédé selon la revendication 2, caractérisé en ce que l'on ne place au-dessus de l'ébauche qu'un seul réservoir dont la surface de base correspond à peu près à la surface de pose supérieure de l'ébauche.

4. Procédé selon la revendication 1, caractérisé en ce que l'on utilise une plaque de SiSiC dont au moins un côté est recouvert d'un mélange de nitrure de bore, de carbure de silicium et de graphite.

5. Procédé selon la revendication 1, caractérisé en ce que quand l'opération de silicisation est terminée on refroidit sous une pression d'au maximum 5 mbar.

6. Procédé selon la revendication 5, caractérisé en ce que quand l'opération de silicisation est terminée on refroidit sous une pression de 1 à 2 mbar.

7. Procédé selon la revendication 1, caractérisé en ce que l'on ne place qu'un seul réservoir de SiSiC au-dessous de la plaque inférieure de SiSiC, dont les dimensions correspondent à peu près à la surface de base de l'ébauche.

8. Procédé selon la revendication 1, caractérisé en ce que l'on utilise comme ébauche une pièce à canaux internes étroits.

9. Procédé selon la revendication 8, caractérisé en ce que l'on utilise comme ébauche un échangeur de chaleur de construction en feuilles.

10. Procédé selon la revendication 9, caractérisé en ce que l'on utilise comme ébauche un échangeur de chaleur parallélépipédique.

11. Procédé selon la revendication 1, caractérisé en ce que l'on place la plaque de SiSiC sur un ou plusieurs réservoirs de SiSiC ouverts par le haut.

12. Procédé selon la revendication 1, caractérisé en ce que la plaque de SiSiC repose sur des réservoirs de SiSiC qui recouvrent au moins 15% et plus spécialement au moins 40% de la surface externe parallèle inférieure de l'ébauche.

13. Procédé selon la revendication 1, caractérisé en ce que la proportion totale du silicium élémentaire employé représente de 40 à 80%, plus spécialement de 60 à 75%, du poids de l'ébauche cokéfiée.

14. Procédé selon la revendication 1, caractérisé en ce que les réservoirs placés au-dessus de l'ébauche sont remplis d'une quantité de silicium qui représente de 50 à 80% et plus spécialement de 60 à 75% de la quantité totale employée de silicium élémentaire.

15. Procédé selon la revendication 1, caractérisé en ce que l'opération de silicisation est effectuée sous vide.

16. Procédé selon la revendication 9, caractérisé en ce que l'on mélange avec un ou plusieurs solvants organiques et liants organiques un mélange de carbure de silicium et de graphite constitué de :
a) 55-65% en poids de carbure de silicium d'une fraction de tamisage de 0-80 µm,
b) 17-23% en poids de carbure de silicium d'une fraction de tamisage de 0-40 µm,
c) 15-21% en poids de carbure de silicium d'une fraction de tamisage de 0-30 µm,
d) 1- 5% en poids de graphite d'une fraction de tamisage de 0-16 µm,
puis avec la masse de coulée formée on fait une feuille de céramique brute avec laquelle on construit ensuite l'échangeur de chaleur.

17. Procédé selon la revendication 16, caractérisé en ce que la fraction de carbure de silicium a) comprend :
10% en poids d'une fraction de tamisage 60-80 µm
40% en poids d'une fraction de tamisage 40-60 µm
40% en poids d'une fraction de tamisage 20-40 µm et
10% en poids d'une fraction de tamisage 0-30 µm.

18. Procédé selon la revendication 16, caractérisé en ce que la fraction de carbure de silicium b) comprend :
10% en poids d'une fraction de tamisage 18-40 µm
40% en poids d'une fraction de tamisage 12-18 µm
40% en poids d'une fraction de tamisage 8-12 µm et
10% en poids d'une fraction de tamisage 0- 8 µm.

19. Procédé selon la revendication 16, caractérisé en ce que la fraction de carbure de silicium c) comprend :
10% en poids d'une fraction de tamisage 0-30 µm
40% en poids d'une fraction de tamisage 3,5-5 µm
40% en poids d'une fraction de tamisage 2,5-3,5 µm et
10% en poids d'une fraction de tamisage 0-2,5 µm.

20. Procédé selon la revendication 16, caractérisé en ce que la poudre de graphite employée comprend :
10% en poids d'une fraction de tamisage 7-16 µm
40% en poids d'une fraction de tamisage 3- 7 µm
40% en poids d'une fraction de tamisage 1- 3 µm
10% en poids d'une fraction de tamisage 0- 1 µm.

21. Procédé selon la revendication 16, caractérisé en ce que l'on utilise un mélange de carbure de silicium et de graphite contenant :
60% en poids de carbure de silicium d'une fraction de tamisage de 0-80 µm
20% en poids de carbure de silicium d'une fraction de tamisage de 0-40 µm
18% en poids de carbure de silicium d'une fraction de tamisage de 0-30 µm et
2% en poids de graphite d'une fraction de tamisage de 0-16 µm.
